# EUROPÄISCHE PATENTSCHRIFT

(11) **EP 3 250 443 B1**
(45) Veröffentlichungstag und Bekanntmachung des Hinweises auf die Patenterteilung: **17.10.2018**
(21) Anmeldenummer: 16700987.7
(22) Anmeldetag: 19.01.2016
(51) Int. Cl.: B62D 15/02, B60W 30/06, G05D 1/02, G08G 1/14, G06K 9/00, H04N 5/247, G06T 7/70, H04N 13/204, G08G 1/16

(54) **VALET PARKING-VERFAHREN UND VALET-PARKING SYSTEM**
VALET PARKING METHOD AND VALET PARKING SYSTEM
PROCÉDÉ VALET PARKING ET SYSTÈME VALET PARKING

(30) Priorität: 26.01.2015 DE 102015201209
(43) Veröffentlichungstag der Anmeldung: 06.12.2017
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2016/050959
(87) Internationale Veröffentlichungsnummer: WO 2016/120119

(56) Entgegenhaltungen:
- US-A1- 2010 156 672
- US-A1- 2013 231 824

## Beschreibung

Die Erfindung betrifft ein Valet Parking-Verfahren und ein Valet-Parking System zum automatischen Verbringen von Fahrzeugen zu einem dem jeweiligen Fahrzeug zugewiesenen Parkplatz innerhalb eines vorgegebenen Parkraums.

Unter einem Valet-Parking Verfahren bzw. einem Valet-Parking System soll hierbei insbesondere ein Verfahren oder System verstanden werden, bei dem ein Fahrer eines Fahrzeugs, dieses an einer vorbestimmten Abgabestelle abgeben kann, woraufhin das Fahrzeug - automatisiert oder durch Service-Personal geparkt wird und auf Wunsch oder Termin dem Fahrer wieder zur Verfügung gestellt wird. Die vorliegende Erfindung befasst sich speziell mit einem Valet-Parking Verfahren und einem Valet-Parking System, bei dem Fahrzeuge durch ein automatisches System geparkt werden. Die Fahrzeuge bewegen sich dabei autonom, also ohne Zutun eines menschlichen Fahrers zu einem zugewiesenen Parkplatz und wieder zurück zu einer Abholposition.

### Stand der Technik

Valet Parking Systeme sind vollautomatische Fahrerassistenzsysteme für Parkieranlagen, die es zumeist über die Kommunikation mit einer zentralen Steuerungseinheit, z.B. einem Parkplatzmanagement-System (Server), ermöglichen, ein Fahrzeug ohne die Einwirkung eines Fahrers von einem Einfahrbereich einer Parkieranlage zu einem Parkfläche zu fahren, um das Fahrzeug dort dauerhaft abzustellen. Der Vorteil von Valet Parking Systemen liegt darin, dass im Gegensatz zu automatischen Parkieranlagen mit Fördersystemen bestehende Anlagen nicht weiter ausgerüstet werden müssen, um dem Fahrer den gesteigerten Komfort zu ermöglichen, ihn von der Parkplatzsuche zu befreien. Weiterhin bekannt sind Systeme, die es dem Fahrer erlauben, sein Fahrzeug über Distanz zu rufen, so dass es vollautomatisch zu einem Abholbereich zurückkehrt, wo es vom Fahrer in Empfang genommen werden kann.

Die DE 10 2012 021 282 A1, beschreibt ein Verfahren zur Koordination des Betriebs von vollautomatisiert fahrenden Kraftfahrzeugen. Dabei wird eine Trajektorie für jedes Kraftfahrzeug aus Egoinformationen und Umgebungsinformationen des Kraftfahrzeuges ermittelt. Im Folgenden wird ermittelt, ob mindestens eine Koordinationsbedingung vorliegt. Eine Koordinationsbedingung liegt beispielsweise bei einer auftretenden Engstelle vor. Es werden Trajektoriendaten über eine Kommunikationsverbindung zwischen den Kraftfahrzeugen ausgetauscht. Es folgt eine Prüfung der Trajektoriendaten der Kraftfahrzeuge auf Konflikte, die aufgrund einer räumlichen und zeitlichen Überlappung der Trajektorien von mindestens zwei der Kraftfahrzeuge und/oder Nichterreichen der Zielposition mindestens eines der Kraftfahrzeuge vorliegen. Falls ein Konflikt vorliegt, erfolgt eine Anpassung der Trajektorie mindestens eines der an dem Konflikt beteiligten Kraftfahrzeuge.

Weiterhin sind Ausprägungen von Valet-Parking Systemen bekannt, die wesentliche Aufgaben der Umfelderfassung in die Parkhausinfrastruktur verlagern und hierüber eine "Fernsteuerung" eines Fahrzeuges umsetzen, indem die Trajektorie von der Start- zur Zielposition von der zentralen Steuerungseinheit berechnet und dem Fahrzeug übertragen wird. Das Fahrzeug fährt im Anschluss diese Trajektorie unter Kontrolle der zentralen Steuerungseinheit ab, wobei der Fortschritt mittels der Lokalisierung durch die infrastrukturgebundenen Umfeldsensoren und ggf. vorhandener Odometrie verfolgt wird.

So beschreibt die US2010/0156672 A1 ein Valet-Parking System nach dem Oberbegriff des Anspruchs 1 und ein Verfahren zum autonomen Parken eines Fahrzeuges auf einer Parkfläche mit einer Vielzahl von Stellplätzen. Dabei wird mittels Sensoren, die auf der Parkfläche angebracht sind, ein Stellplatz für das Fahrzeug aus der Vielzahl von Stellplätzen ermittelt. Eine Position und Bewegung des Fahrzeuges wird durch Leitsensoren auf der Parkfläche erfasst. Eine Bewegungsbahn wird basierend auf einer aktuellen Position des Fahrzeuges und auf Informationen bezüglich des ermittelten Stellplatzes erstellt und an das Fahrzeug übermittelt. Die Bewegungsbahn wird modifiziert, wenn ein Hindernis auf der Bewegungsbahn des Fahrzeuges erscheint.

Die DE 10 2012 016 800 A1 beschreibt ein Verfahren zur Ermittlung einer Fahrzeugposition eines zu lokalisierenden Fahrzeugs innerhalb eines vorgegebenen Fahrbereichs in einer kartierten Umgebung, wobei die Fahrzeugposition durch eine Auswertung von Positionsdaten mindestens einer vorbestimmten Komponente des Fahrzeugs bestimmt wird und die Positionsdaten durch insbesondere eine Vielzahl von innerhalb der kartierten Umgebung fest angeordneten Positionserfassungssensoren bereitgestellt werden. Ebenso betrifft die Erfindung eine entsprechende Vorrichtung zur Ermittlung einer Fahrzeugposition. Dadurch ist beispielsweise pilotiertes Fahren in einem Parkhaus möglich.

Die vorliegende Erfindung zielt auf automatische Valet-Parking Systeme mit infrastrukturgebundener Sensorik ab, wobei die zugehörigen Sensoren dafür eingesetzt werden, die innerhalb eines vorgegebenen Parkraums, der von dem Valet-Parking System bewirtschaftet wird, autonom fahrenden Fahrzeuge (im Folgenden auch als "AVP-Fahrzeuge" bezeichnet), zu lokalisieren und deren Positionen insbesondere mit einer vorhandenen digitalen Karte zu synchronisieren. Bei derartigen Systemen ist es aus wirtschaftlicher Sicht von Bedeutung, die Anzahl der Umfeldsensoren zu minimieren, um ein kostengünstige Systemumsetzung zu ermöglichen. Damit ist jedoch unter Umständen nicht mehr gewährleistet, dass die AVP-Fahrzeuge stets in der erforderlichen Genauigkeit lokalisiert werden können. Es besteht die Gefahr, dass höhere Abweichungen beim Abfahren der jeweiligen Trajektorie entstehen können, da insbesondere in Bereichen, die mit einer reduzierten Genauigkeit durch die Sensoren erfasst werden, auf eine driftbehaftete Odometrie zurückgegriffen werden muss, um das Fahrzeug zu lokalisieren.

Innerhalb von Bereichen, in denen die Lokalisierung wegen geringerer Abdeckung der von dem Fahrzeug befahrenen Bereiche durch die Umfeldsensoren oder wegen höherer Messfehler, die z.B. durch einen hohen Abstand des AVP-Fahrzeugs zum Sensor, oder durch Verdeckung des Erfassungsbereichs durch parkende Fahrzeuge verursacht werden können, nicht mit ausreichender Genauigkeit durchgeführt werden kann, wird die Fahrzeugodometrie eingebunden, um Bewegungen des Fahrzeuges innerhalb des Parkraums, z.B. auf einer digitalen Karte zu verfolgen. Da die Odometrie üblicherweise mit Messfehlern behaftet ist, die zu einem Drift-Effekt bei der erwarteten Fahrzeugposition führen, können insbesondere enge Durchfahrten eines Parkhauses nur noch mit hohem Kollisionsrisiko befahren werden. Verstärkt wird dieses Risiko noch, wenn die Trajektorienplanung einer zentralen Steuerungseinheit den Überschneidungsbereich der Trajektorien zweier gleichzeitig innerhalb des Parkraums autonom bewegten Fahrzeuge in einen Bereich verlegt, der mit einer hohen Unsicherheit über die Fahrzeuglokalisierung behaftet ist.

### Offenbarung der Erfindung

Die Erfindung hat nun zur Aufgabe, ein Valet-Parking System dahingehend zu verbessern, dass das Risiko einer Kollision zwischen sich begegnenden Fahrzeugen reduziert wird. Dies wird durch ein Valet-Parking System gemäß dem Anspruch 1 erreicht.

Durch die Erfindung wird ermöglicht dass, zeitgleich mehrere Fahrzeugen mit einer automatisierten Valet Parking Funktion sicher und kollisionsfrei einen dafür vorgesehenen Parkraum, wie beispielsweise ein Parkhaus, autonom befahren können. Der Erfindung liegt die Idee zugrunde, dass Überschneidungsbereiche der Trajektorien, insbesondere sogenannte Begegnungspunkte, durch eine zentrale Steuerungseinheit an Stellen geplant werden, an denen infrastrukturgebundene Sensoren eine hohe Lokalisierungsgenauigkeit besitzen.

Autonom bzw. automatisch im Sinne der vorliegenden Erfindung bedeutet insbesondere, dass das Fahrzeug selbstständig, also ohne einen Eingriff eines Fahrers, navigiert. Das Fahrzeug fährt also selbstständig entlang einer Trajektorie, ohne dass ein Fahrer hierfür das Fahrzeug steuern müsste. Ein Führen umfasst insbesondere eine Quer- und/oder eine Längsführung des Fahrzeugs. Beim autonomen Fahren oder Navigieren muss der Fahrer also selbst nicht im Fahrzeug sein.

Nach einem ersten Aspekt der Erfindung wird ein Valet-Parking System zum automatischen Verbringen eines Fahrzeugs von einer Übergabezone zu einem zugewiesenen Stellplatz innerhalb eines vorgegebenen Parkraums und zum automatischen Ausparken und Verbringen des Fahrzeugs zu einer Abholzone vorgeschlagen. Das Valet-Parking System umfasst eine zentrale Steuerungseinheit, beispielsweise einen Server, sowie ein Parkplatzüberwachungssystem mit mindestens einer ortsfest angeordneten Sensoreinheit, einer sogenannten infrastrukturgebundenen Sensoreinheit. Die zentrale Steuerungseinheit kann Daten der Sensoreinheiten empfangen und verarbeiten, um daraus Informationen über die aktuell innerhalb des Parkraums autonom bewegten Fahrzeuge zu erhalten. Ferner ist die zentrale Steuerungseinheit bevorzugt ausgebildet, die Stellplätze des Parkraums zu verwalten und an ankommende Fahrzeuge zuzuteilen, sowie einen Abholvorgang auf Wunsch eines Fahrers oder nach anderen Kriterien, wie z.B, ein vorher festgelegter Abholtermin, ein bestimmtes Ereignis, oder dem Fahrplan eines öffentlichen Verkehrsmittels, zu initiieren.

Das Parkplatzüberwachungssystem ist ausgebildet, die innerhalb des vorgegebenen Parkraums fahrenden Fahrzeuge zu lokalisieren und Informationen über die aktuelle Fahrzeugposition an die zentrale Steuerungseinheit zu übermitteln. Dazu weisen die zentrale Steuerungseinheit und das Fahrzeug jeweils insbesondere eine entsprechende Kommunikationsschnittstelle auf.

Die zentrale Steuerungseinheit ist ausgebildet, Informationen an das Fahrzeug zu übermitteln, beispielsweise über eine drahtlose Datenverbindung, so dass das Fahrzeug autonom entlang einer auf den Informationen basierenden Trajektorie innerhalb des Parkraums geführt werden kann, beispielsweise von der Übergabezone zu dem zugewiesenen Stellplatz oder von dem Stellplatz zu der Abholzone. Bevorzugt kann die Trajektorie von der zentralen Steuerungseinheit berechnet und an das Fahrzeug übertragen werden.

Erfindungsgemäß ist das Valet-Parking System derart ausgebildet, dass die Sensoreinheiten derart angeordnet sind, dass bestimmte Bereiche des Parkraums mit einer hohen Genauigkeit durch die Sensoreinheiten überwacht werden und andere Bereiche des Parkraums mit einer niedrigeren Genauigkeit durch die Sensoreinheiten überwacht werden. Die zentrale Steuerungseinheit ist eingerichtet, Überschneidungsbereiche von Trajektorien anderer Fahrzeuge mit der Trajektorie zu bestimmen und die Trajektorie derart anzupassen, dass ein Überschneidungsbereich in einem Bereich des Parkraums, der mit hoher Genauigkeit durch die Sensoreinheiten überwacht wird, zu liegen kommt.

Bevorzugt sind innerhalb der Bereiche des Parkraums, die mit einer hohen Genauigkeit durch die Sensoreinheiten überwacht werden, Begegnungspunkte definiert und die zentrale Steuerungseinheit ist eingerichtet, die Trajektorie derart anzupassen, dass ein Überschneidungsbereich in einem Bereich eines solchen Begegnungspunktes, zu liegen kommt.

Damit wird vorteilhaft eine Vermeidung von Kollisionen zwischen AVP-Fahrzeugen, die zeitgleich innerhalb des Parkraums bewegt werden, erreicht, indem insbesondere ausgewiesene Stellen bzw. Bereiche vorgesehen werden, in denen sich die Fahrzeuge begegnen bzw. nahekommen ("Begegnungspunkte"). Diese ausgewiesene Stellen bzw. Bereiche werden mit hoher Genauigkeit durch mindestens eine Sensoreinheit des Parkplatzüberwachungssystems erfasst, so dass von der zentralen Steuerungseinheit genaue Informationen an die sich begegnenden Fahrzeuge übermittelt werden können und die Trajektorien eines oder beider sich begegnender Fahrzeuge derart bestimmt werden können, dass eine Kollision verhindert wird. Würde die Trajektorienplanung den Überschneidungsbereich bzw. die Begegnungspunkte zweier Fahrzeuge beispielsweise in einem Bereich vorsehen, für den mittels der infrastrukturgebundener Sensoreinheiten nur eine sehr ungenaue Lokalisierung (oder gar keine) möglich ist, könnte es infolge des Odometriedrifts und der dadurch bedingten Abweichung der tatsächlichen Fahrzeugposition zu einer berechneten Fahrzeugposition auf der Trajektorie zu einer Kollision zwischen den Fahrzeugen kommen.

In einer bevorzugten Ausführung der Erfindung ist vorgesehen, dass die von der zentralen Steuerungseinheit an das Fahrzeug übermittelten Informationen Weginformationen und/oder Geschwindigkeitsinformationen und/oder Lenkanweisungen und/oder Halte- und Startanweisungen umfassen. Eine aus diesen Informationen ermittelte Trajektorie umfasst insbesondere nicht nur einen Pfad entlang dem sich das Fahrzeug innerhalb des Parkraums bewegt, sondern umfasst zusätzlich zeitliche Komponenten. Dies ist vorteilhaft, da bei der Bestimmung von Überschneidungsbereichen von Trajektorien zweier AVP-Fahrzeuge auch berücksichtigt werden kann, ob sich die Trajektorien nicht nur räumlich, sondern auch zeitlich überschneiden. Wenn beispielsweise nur eine räumliche Überschneidung, jedoch keine zeitliche Überschneidung vorliegt, kann eine Anpassung der Trajektorien unnötig sein, da kein Kollisionsrisiko besteht. Insbesondere ist es bei einer räumlichen und zeitlichen Überschneidung möglich, die Trajektorien beispielsweise durch Änderung der Geschwindigkeit entlang des Pfades und/oder durch das Einfügen von Haltepunkten, an denen das Fahrzeug für eine gewisse Zeit wartet, in einfacher Weise anzupassen.

In einer weiteren bevorzugten Ausführung der Erfindung ist mindestens eine Sensoreinheit des Parkplatzüberwachungssystems als 2D-Videokamerasystem oder als 3D-Videokamerasystem ausgebildet, das insbesondere eine Objekterkennungsfunktion und/oder eine Objektverfolgungsfunktion implementiert. In einer alternativen Ausprägung können die Objekterkennungsfunktion und/oder die Objektverfolgungsfunktion auch auf der zentralen Steuerungseinheit umgesetzt sein.

Bevorzugt ist die zentrale Steuerungseinheit eingerichtet, die Trajektorie in einem Überschneidungsbereich mit der Trajektorie eines anderen Fahrzeugs derart anzupassen, dass Kollisionen mit anderen Fahrzeugen verhindert werden, wobei die Trajektorie fortlaufend auf Basis von durch eine oder mehrere Sensoreinheiten erfassten Umgebungsinformationen, insbesondere Bildinformationen mit erkannten Objekten, angepasst wird.

Unter einer hohen Genauigkeit der Überwachung und insbesondere unter einer hohen Genauigkeit der erfassten Umgebungsinformationen kann bevorzugt verstanden werden, dass Umgebungsinformationen der entsprechenden Bereiche des Parkraums mit einer größeren Ortsauflösung und/oder einer größeren Zeitauflösung und oder einem größeren Bildkontrast zur Verfügung stehen als in den Bereichen des Parkraums, die mit einer niedrigeren Genauigkeit durch die Sensoreinheiten überwacht werden.

In einer besonders bevorzugten Ausführung der Erfindung werden zusätzlich Umgebungsinformationen durch Umfelderfassungssensoren an dem Fahrzeug erfasst, und von dem Fahrzeug, beispielsweise drahtlos, an die zentrale Steuerungseinheit gesendet. Diese zusätzlichen Umgebungsinformationen können insbesondere bei der Anpassung der Trajektorie zur Vermeidung von Kollisionen in Überschneidungsbereichen berücksichtigt werden.

In einer weiter bevorzugten Ausführung der Erfindung weist die zentrale Steuerungseinheit eine Speichereinheit auf, auf der eine 2D- oder eine 3D-Karte des vorgegebenen Parkraums digital gespeichert ist. Diese digitale Karte umfasst Informationen über Bereiche des Parkraums, die mit hoher Genauigkeit durch die Sensoreinheiten überwacht werden, Bereiche des Parkraums, die mit niedrigerer Genauigkeit durch die Sensoreinheiten überwacht werden, verfügbare Parkflächen, befahrbare Fahrstreifen, Verkehrsregeln und aktuelle Positionen von Fahrzeugen. Die Karte wird bevorzugt laufend durch mittels durch die Sensoreinheiten erfasste Informationen und gegebenenfalls durch Umfeldsensoren an den Fahrzeugen erfasste Informationen aktualisiert. Die zentrale Steuerungseinheit ist in dieser Ausführung ausgebildet, Trajektorien für die Fahrzeuge auf Basis der Karte zu bestimmen und beim Auftreten von Überschneidungsbereichen derart anzupassen, dass die Überschneidungsbereiche erfindungsgemäß in einem Bereich des Parkraums, der mit hoher Genauigkeit durch die Sensoreinheiten überwacht wird, zu liegen kommt.

Nach einem zweiten Aspekt der Erfindung wird ein Parkraum vorgeschlagen, der ein wie zuvor beschrieben ausgebildetes Valet-Parking System umfasst. Ein Parkraum im Sinne der Erfindung kann jeder Raum sein, der zum Abstellen von Fahrzeugen geeignet ist. Der Parkraum kann beispielsweise eine Parkfläche im Freien oder innerhalb eines Gebäudes mit einer Mehrzahl von ausgewiesenen Parkplätzen sein, oder ein Parkhaus mit mehreren Ebenen oder eine Anlage mit einer Mehrzahl von Einzelgaragen.

Nach einem dritten Aspekt der Erfindung wird ein Verfahren zur zum automatischen Verbringen eines Fahrzeugs von einer Übergabezone zu einem zugewiesenen Stellplatz innerhalb eines vorgegebenen Parkraums und zum automatischen Ausparken und Verbringen des Fahrzeugs zu einer Abholzone vorgeschlagen, wobei die innerhalb des vorgegebenen Parkraums fahrenden Fahrzeuge mittels eines Parkplatzüberwachungssystem mit mindestens einer ortsfest angeordneten Sensoreinheit lokalisiert und Informationen über die aktuelle Fahrzeugposition an eine zentrale Steuerungseinheit übermittelt werden. Die zentrale Steuerungseinheit übermittelt Informationen an das Fahrzeug, so dass das Fahrzeug autonom entlang einer auf den Informationen basierenden Trajektorie innerhalb des Parkraums geführt werden kann.
Erfindungsgemäß ist vorgesehen, dass die Sensoreinheiten derart angeordnet sind, dass bestimmte Bereiche des Parkraums mit einer hohen Genauigkeit durch die Sensoreinheiten überwacht werden und andere Bereiche des Parkraums mit einer niedrigeren Genauigkeit durch die Sensoreinheiten überwacht werden, wobei Überschneidungsbereiche von Trajektorien anderer Fahrzeuge mit der Trajektorie von der zentralen Steuerungseinheit bestimmt werden und die Trajektorie derart angepasst wird, dass ein Überschneidungsbereich in einem Bereich des Parkraums, der mit hoher Genauigkeit durch die Sensoreinheiten überwacht wird, zu liegen kommt.

Das erfindungsgemäße Verfahren sieht es demnach vor, dass die beschriebenen Überschneidungsbereiche und insbesondere die Begegnungspunkte der Fahrzeuge nur in Bereichen geplant werden, an denen eine Lokalisierung ausreichend hoher Genauigkeit durch die infrastrukturgebundenen Sensoren sichergestellt werden kann.

Nach einem weiteren Aspekt der Erfindung wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung bietet gegenüber dem Stand der Technik die Vorteile dass, die Anzahl der infrastrukturgebundener Sensoren gering gehalten werden kann, womit Systemkosten eingespart werden können, das Kollisionsrisiko für sich begegnende AVP-Fahrzeuge deutlich reduziert wird, wodurch mehrere AVP-Fahrzeug zeitgleich innerhalb des Parkraums bewegt werden können und die Effizienz des erfindungsgemäßen Valet-Parking Systems gegenüber dem Stand der Technik verbessert wird.

Kurze Beschreibung der Zeichnungen
Figur 1 zeigt einen Parkraum mit einem Valet-Parking System, sowie ein Fahrzeug, das sich innerhalb des Parkraums autonom entlang einer Trajektorie bewegt.
Figur 2 zeigt einen Parkraum mit einem erfindungsgemäß ausgebildeten Valet-Parking System, sowie zwei Fahrzeuge, die sich innerhalb des Parkraums autonom bewegen und deren Trajektorien einen Überschneidungsbereich aufweisen.

Die Figuren stellen den Gegenstand nur schematisch dar.

### Ausführungen der Erfindung

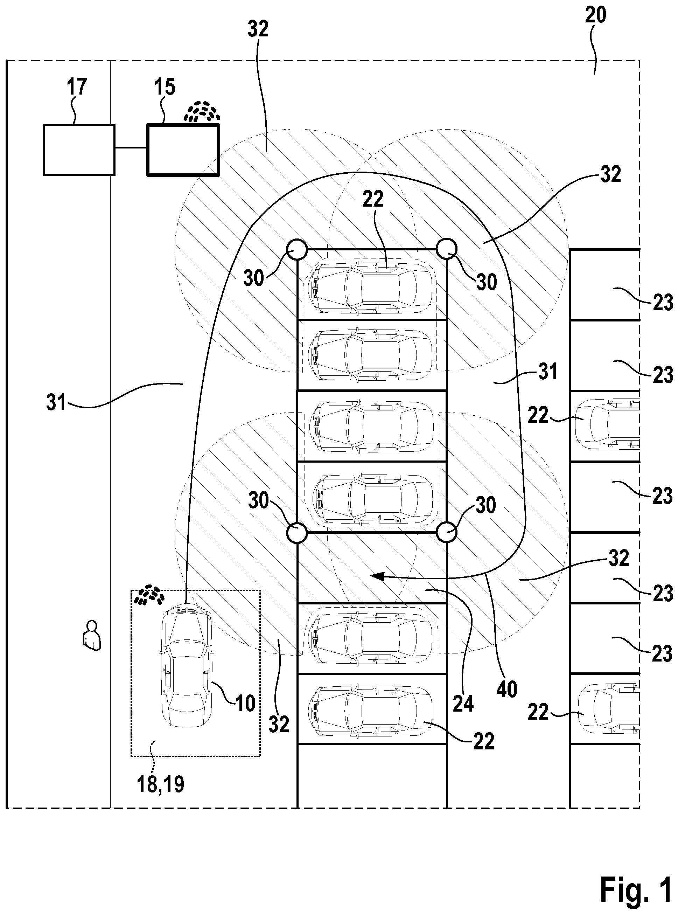

In Figur 1 ist ein Parkraum 20 mit einer Vielzahl von Stellplätzen 23 in einer schematischen Ansicht von oben dargestellt. Die schematische Darstellung zeigt dabei einen Parkraum 20 als offene Fläche, wobei Erfindung ebenso auf Parkhäuser, Garagenhöfe und Tiefgaragen anwendbar ist.

Der Parkraum 20 umfasst eine Übergabezone 18, an der ein Fahrzeug 10 an den Betreiber des Parkraums 20 übergeben werden kann. Dazu fährt der Fahrer des Fahrzeugs 10 sein Fahrzeug 10 in die Übergabezone 18, verlässt sein Fahrzeug 10 und übergibt sein Fahrzeug 10 an den Betreiber des Parkraums 20.

Zur Überwachung des Fahrzeugs 10 während es sich innerhalb des Parkraums 20 bewegt, ist dem Parkraum 20 ein Parkplatzüberwachungssystem zugeordnet, das eine Mehrzahl von als Kameras ausgebildete Sensoreinheiten 30 umfasst. Durch die räumliche Anordnung der Sensoreinheiten 30 sowie durch den begrenzten Erfassungsbereich jeder Sensoreinheit 30 und gegebenenfalls den Erfassungsbereich verdeckende Fahrzeuge, ergeben sich Bereiche 32, die mit einer hohen Genauigkeit von den Sensoreinheiten 30 erfasst, also überwacht werden, und Bereiche 31, die mit einer niedrigeren Genauigkeit erfasst, also überwacht werden. Die Sensoreinheiten 30 sind dabei bevorzugt so auf dem Parkplatz 10 verteilt angeordnet, dass das Fahrzeug 10 ständig im Blickfeld von mindestens einer Sensoreinheit 30 ist. Die innerhalb des Parkraums ortsfest verbauten Sensoreinheiten 30, z.B. 360° Video-Kameras umfassen eine Objekterkennung und -tracking Funktionalität. In einer alternativen Ausprägung kann das Objekttracking auch auf zentrale Steuerungseinheit 15 umgesetzt sein.

Nach der Übergabe des Fahrzeugs 10 an den Parkplatzbetreiber wird dem Fahrzeug 10 durch eine zentrale Steuerungseinheit 15 aus den möglichen freien Stellplätzen 23 ein freier Stellplatz 24 als Parkposition zugewiesen. Bereits belegte Stellplätze sind in der Figur 1 mit dem Bezugszeichen 22 gekennzeichnet.

Nach Zuweisung der Parkposition wird das Fahrzeug 10 auf den als zugewiesenen freien Stellplatz 24 bewegt. Das Fahrzeug 10 ist eingerichtet, ein Fahrmanöver autonom mithilfe eines Parkassistenzsystems auszuführen. Der zentralen Steuerungseinheit 15 wird Zugriff auf das Parkassistenzsystem gewährt, so dass sich das Fahrzeug 10 auf dem Parkplatz 10 autonom bewegen kann und selbstständig die Parkposition 24 ansteuert. Erfindungsgemäß werden von der zentralen Steuerungseinheit 15 entsprechende Informationen an das Fahrzeug 10 übermittelt, so dass das Fahrzeug 10 autonom entlang einer auf den Informationen basierenden Trajektorie 40 innerhalb des Parkraums 20 geführt werden kann.

Die von den Sensoreinheiten 30 aufgenommenen Umfelddaten werden an die zentralen Steuerungseinheit 15 übermittelt. Je nach Ausführungsvariante kann dies über Kabelverbindungen oder auch drahtlos geschehen.

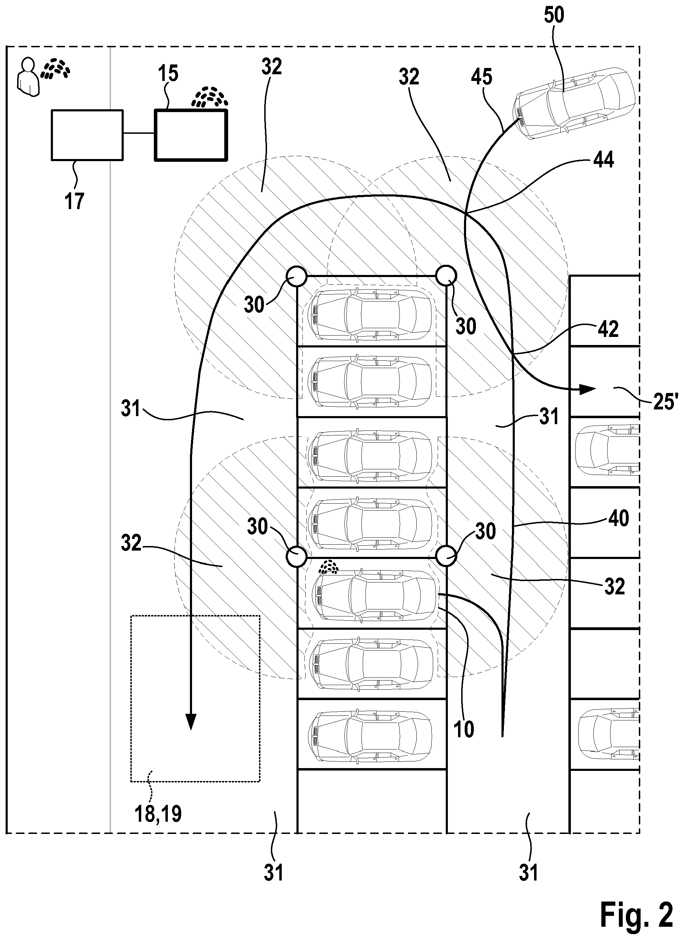

Möchte der Fahrer sein Fahrzeug 10 wieder abholen, wird dem Parkassistenzsystem des Fahrzeugs 10 von der zentralen Steuerungseinheit 15 der Wunsch des Fahrers übermittelt. Dabei können auch Informationen übertragen werden, beispielsweise die Position der gewünschten Abholzone 19. Das Fahrzeug steuert daraufhin die Abholzone 19 selbstständig an, wobei es sich entlang einer Trajektorie 40 bewegt. Diese Situation ist in Figur 2 dargestellt. In der gezeigten beispielhaften Ausführung stimmen die Übergabezone 18 und die Abholzone 19 überein. Alternativ können beispielsweise räumlich getrennte Übergabezonen und Abholzonen vorgesehen sein.

Bei der in Figur 2 dargestellten Situation ist außer dem Fahrzeug 10 noch ein weiteres Fahrzeug 50 autonom innerhalb des Parkraums 20 unterwegs. Das Fahrzeug 50 steuert in diesem Beispiel den Parkplatz 25 an, der ihm von der zentralen Steuerungseinheit 15 zugewiesen wurde. Das Fahrzeug 50 bewegt sich dazu entlang einer Trajektorie 45. Es ergibt sich ein Überschneidungsbereich 42 der Trajektorien 40 und 45. Um in diesem Überschneidungsbereich Kollisionen der Fahrzeuge 10 und 50 zu vermeiden, sollte eine Sensoreinheit 30 diesen Überschneidungsbereich mit hoher Genauigkeit erfassen. Im vorliegenden Beispiel fällt der Überschneidungsbereich 42 jedoch in einen Bereich 31, der mit niedrigerer Genauigkeit von den Sensoreinheiten 30 überwacht wird. Aus diesem Grund wird zumindest eine der Trajektorien 40 und 45 durch die zentrale Steuerungseinheit 15 derart angepasst, dass sich der Überschneidungsbereich 44 in einem Bereich 32 des Parkraums 20 ausbildet, der mit hoher Genauigkeit von mindestens einer Sensoreinheit 30 erfasst und überwacht wird. In dem dargestellten Beispiel wird dies erreicht, indem das Fahrzeug 50 solange wartet, die Trajektorie 45 also durch Einfügen einer zeitlichen Verzögerung angepasst wird, bis sich der Überschneidungsbereich 44 in einem Bereich 32 des Parkraums 20 ausbildet, der mit hoher Genauigkeit von mindestens einer Sensoreinheit 30 erfasst und überwacht wird. Alternativ oder zusätzlich kann auch die Trajektorie 40 durch eine Änderung der Geschwindigkeit und/oder der Bahn entsprechend angepasst werden, dass sich ein Überschneidungsbereich mit der Trajektorie 45 in einem Bereich 32 des Parkraums 20 ausbildet, der mit hoher Genauigkeit von mindestens einer Sensoreinheit 30 erfasst und überwacht wird.

Zur Anpassung der Trajektorien 40 und/oder 45 weist die zentrale Steuerungseinheit 15 in diesem Ausführungsbeispiel eine Speichereinheit 17 auf, auf der eine digitale Karte des vorgegebenen Parkraums 20 gespeichert ist. Diese digitale Karte umfasst Informationen über die Positionen der Sensoreinheiten 30, die zur Lokalisierung der Fahrzeuge 10, 50 in der Parkraumkarte eingesetzt werden. Außerdem umfasst die Karte die Positionen der Bereiche 32 des Parkraums 20, die mit hoher Genauigkeit durch die Sensoreinheiten 30 überwacht werden sowie über die Positionen der Bereiche 31 des Parkraums, die mit niedrigerer Genauigkeit durch die Sensoreinheiten 30 überwacht werden. Weiterhin kann die Karte Informationen über belegte und verfügbare Parkflächen, befahrbare Fahrstreifen, Verkehrsregeln und aktuelle Positionen von innerhalb des Parkraums 20 parkenden oder fahrenden oder wartenden Fahrzeugen umfassen. Die Karte wird kontinuierlich durch mittels von den Sensoreinheiten 30 erfassten Umfeldinformationen und gegebenenfalls zusätzlich durch von Umfeldsensoren an den Fahrzeugen 10, 50 erfasste Informationen aktualisiert. In einer bevorzugten Ausführung ist es möglich, die Karte um das Wissen der zu erwartenden Ungenauigkeit einer Positionsermittlung eines Fahrzeugs in Abhängigkeit der x,y-Koordinate zu erweitern. Dadurch ist es möglich, die Karte nicht nur in Bereiche 32 einer höchstmöglichen Genauigkeit der Erfassung durch die Sensoreinheiten 30 und in Bereiche 31 einer niedrigstmöglichen Genauigkeit der Erfassung durch die Sensoreinheiten 30 einzuteilen, sondern weitere Abstufungen der Genauigkeit der Erfassung durch die Sensoreinheiten 30 vorzusehen.

Die zentrale Steuerungseinheit 15 ist in dieser Ausführung ausgebildet, initiale Trajektorien 40, 45 für die Fahrzeuge 10, 50 auf Basis der Karte zu bestimmen und beim Auftreten von Überschneidungsbereichen derart anzupassen, dass die Überschneidungsbereiche erfindungsgemäß in einem Bereich 32 des Parkraums 20, der mit hoher Genauigkeit durch die Sensoreinheiten 30 überwacht wird, zu liegen kommen.

Die zentrale Steuerungseinheit 15 implementiert bevorzugt eine Software zur Ermittlung der Trajektorie eines AVP-Fahrzeuges 10 von einem Start- zu einem Zielort, beispielsweise von einem Stellplatz 24 zu einer Abholzone 19. Dabei beschreibt eine Trajektorie 40 den zu befahrenden Pfad eines ausgewiesenen Referenzpunktes des Fahrzeuges 10 (z.B. dem Hinterachsmittelpunkt) in x,y-Koordinaten relativ zu einem festgelegten Koordinatensystem des Parkraums 20 und die jeweils einzuregelnde Geschwindigkeit des Fahrzeugs 10 abhängig von seiner Position auf dem Pfad. Erfindungsgemäß wird durch die Software überprüft, ob einzelne Trajektorien wenigstens zweier Fahrzeuge 10, 50 einen Überschneidungsbereich 42 aufweisen, Dazu wird ermittelt, ob die Trajektorien 40 und 45 einen geometrischen Begegnungspunkt aufweisen. Dazu ist es nicht zwingend notwendig, dass tatsächlich ein Schnittpunkt der Trajektorien 40 und 45 existiert, es kann stattdessen ausreichend sein, dass der Abstand zwischen den Trajektorien 40 und 45 zumindest einmal einen definierten Mindestabstand unterschreitet. Der Mindestabstand kann dabei beispielsweise abhängig von den beteiligten Fahrzeugtypen definiert sein. Sollte dies zutreffen, wird mittels der ebenfalls vorhandenen zeitlichen Information ermittelt, ob die Fahrzeuge sich dort unter dem zeitlichen Gesichtspunkt ebenfalls begegnen. Sollte dies der Fall sein, wird mittels einer geeigneten Optimierungsstrategie die Trajektorie 40, 45 eines oder beider Fahrzeuge 10, 50 zeitlich oder geometrisch derart angepasst, dass der angepasste Überschneidungsbereich 44, oder mit anderen Worten der räumliche und zeitliche Begegnungspunkt in einem Bereich 32 hoher Lokalisierungsgenauigkeit liegt. Die zentrale Steuerungseinheit 15 kann vorzugsweise eine Datenverarbeitungseinrichtung umfassen, die die vorstehend genannten Aufgaben durchführt oder unterstützt.

In einer beispielhaften ersten Ausprägung kann ausgehend von dem initial ermittelten Begegnungspunkt ermittelt werden, wo entlang der gemeinsamen Trajektorie eine hohe Lokalisierunsgenauigkeit vorliegt. Die Geschwindigkeiten oder die vorgesehen Pfade der betroffenen Fahrzeuge 10 und 50 werden derart angepasst, dass dieses Ziel erreicht wird.

Die Erfindung ist nicht auf die hier beschriebenen Ausführungsbeispiele und die darin hervorgehobenen Aspekte beschränkt. Vielmehr ist die Erfindung innerhalb des durch die Ansprüche angegebenen Bereichs definiert.

## Patentansprüche

1. Valet-Parking System zum automatischen Verbringen eines Fahrzeugs (10, 50) von einer Übergabezone (18) zu einem zugewiesenen Stellplatz (24) innerhalb eines vorgegebenen Parkraums (20) und zum automatischen Ausparken und Verbringen des Fahrzeugs (10, 50, 60) zu einer Abholzone (19), umfassend eine zentrale Steuerungseinheit (15) und ein Parkplatzüberwachungssystem mit mindestens einer ortsfest angeordneten Sensoreinheit (30),
wobei das Parkplatzüberwachungssystem ausgebildet ist, die innerhalb des vorgegebenen Parkraums (20) fahrenden Fahrzeuge (10, 50) zu lokalisieren und Informationen über die aktuelle Fahrzeugposition an die zentrale Steuerungseinheit (15) zu übermitteln,
wobei die zentrale Steuerungseinheit (15) ausgebildet ist, Informationen an das Fahrzeug (10, 50) zu übermitteln, so dass das Fahrzeug (10) autonom entlang einer auf den Informationen basierenden Trajektorie (40, 45) innerhalb des Parkraums (20) geführt werden kann,
**dadurch gekennzeichnet, dass**
die Sensoreinheiten (30) derart angeordnet sind, dass bestimmte Bereiche (32) des Parkraums (20) mit einer hohen Genauigkeit durch die Sensoreinheiten (30) überwacht werden und andere Bereiche (31) des Parkraums mit einer niedrigeren Genauigkeit durch die Sensoreinheiten (30) überwacht werden, wobei
die zentrale Steuerungseinheit (15) eingerichtet ist, Überschneidungsbereiche (42, 44) von Trajektorien (45) anderer Fahrzeuge mit der Trajektorie (40) zu bestimmen und die Trajektorie (40) derart anzupassen, dass ein Überschneidungsbereich (44) in einem Bereich (32) des Parkraums (20), der mit hoher Genauigkeit durch die Sensoreinheiten (30) überwacht wird, zu liegen kommt.

2. Valet-Parking System nach Anspruch 1, **dadurch gekennzeichnet, dass** innerhalb der Bereiche (32) des Parkraums (20), die mit einer hohen Genauigkeit durch die Sensoreinheiten (30) überwacht werden, Begegnungspunkte definiert sind und die zentrale Steuerungseinheit (15) eingerichtet ist, die Trajektorie (40) derart anzupassen, dass ein Überschneidungsbereich (44) in einem Bereich eines Begegnungspunktes, zu liegen kommt.

3. Valet-Parking System nach einem der Ansprüche 1 oder 2, **dadurch gekennzeichnet, dass** die von der zentralen Steuerungseinheit (15) an das Fahrzeug (10, 50, 60) übermittelten Informationen Weginformationen und/oder Geschwindigkeitsinformationen und/oder Lenkanweisungen und/oder Halte- und Startanweisungen umfassen.

4. Valet-Parking System nach einem der Ansprüche 1 bis 3, **dadurch gekennzeichnet, dass** mindestens eine Sensoreinheit (30) als 2D-Videokamerasystem oder als 3D-Videokamerasystem ausgebildet ist, das insbesondere eine Objekterkennungsfunktion und/oder eine Objektverfolgungsfunktion implementiert.

5. Valet-Parking System nach einem der Ansprüche 1 bis 4 , **dadurch gekennzeichnet, dass** die zentrale Steuerungseinheit (15) eingerichtet ist, die Trajektorie (40) in einem Überschneidungsbereich derart anzupassen, dass Kollisionen mit anderen Fahrzeugen verhindert werden, wobei die Trajektorie (40) fortlaufend auf Basis von durch eine oder mehrere Sensoreinheiten (30) erfassten Umgebungsinformationen angepasst wird.

6. Valet-Parking System nach einem der Ansprüche 4 oder 5, **dadurch gekennzeichnet, dass** in den Bereichen (32) des Parkraums, die mit einer hohen Genauigkeit durch die Kameras (30) überwacht werden, Umgebungsinformationen mit einer größeren Ortsauflösung und/oder einer größeren Zeitauflösung und oder einem größeren Bildkontrast zur Verfügung stehen als in den Bereichen (31) des Parkraums, die mit einer niedrigeren Genauigkeit durch die Sensoreinheiten (30) überwacht werden.

7. Valet-Parking System nach Anspruch 5 oder 6, **dadurch gekennzeichnet, dass** zusätzlich Umgebungsinformationen durch Umfelderfassungssensoren an dem Fahrzeug (10) erfasst werden und von dem Fahrzeug an die zentrale Steuerungseinheit (15) gesendet werden, wobei die zusätzlichen Umgebungsinformationen bei der Anpassung der Trajektorie (40, 45) berücksichtigt werden.

8. Valet-Parking System nach einem der Ansprüche 1 bis 7, **dadurch gekennzeichnet, dass** die zentrale Steuerungseinheit (15) eine Speichereinheit (17) aufweist, wobei auf der Speichereinheit (17) eine 2D-oder eine 3D-Karte des vorgegebenen Parkraums (20) gespeichert ist, welche Informationen über Bereiche (32) des Parkraums (20), die mit hoher Genauigkeit durch die Sensoreinheiten (30) überwacht werden, Bereiche (31) des Parkraums (20), die mit niedrigerer Genauigkeit durch die Sensoreinheiten (30) überwacht werden, verfügbare Parkflächen, befahrbare Fahrstreifen, Verkehrsregeln und aktuelle Positionen von Fahrzeugen umfasst, und wobei die Karte laufend durch mittels durch die Sensoreinheiten (30) erfasste Informationen aktualisiert wird und die zentrale Steuerungseinheit (15) ausgebildet ist, Trajektorien (40, 45) auf Basis der Karte zu bestimmen und anzupassen.

9. Parkraum (20) mit Valet-Parking System nach einem der Ansprüche 1 bis 8.

10. Verfahren zur zum automatischen Verbringen eines Fahrzeugs (10, 50) von einer Übergabezone (18) zu einem zugewiesenen Stellplatz (24) innerhalb eines vorgegebenen Parkraums (20) und zum automatischen Ausparken und Verbringen des Fahrzeugs (10, 50) zu einer Abholzone (19), wobei die innerhalb des vorgegebenen Parkraums (20) fahrenden Fahrzeuge (10, 50) mittels eines Parkplatzüberwachungssystem mit mindestens einer ortsfest angeordneten Sensoreinheit (30) lokalisiert und Informationen über die aktuelle Fahrzeugposition an eine zentrale Steuerungseinheit (15) zu übermittelt werden,
die zentrale Steuerungseinheit (15) Informationen an das Fahrzeug (10, 50) übermittelt, so dass das Fahrzeug (10, 50) autonom entlang einer auf den Informationen basierenden Trajektorie (40, 45) innerhalb des Parkraums (20) geführt werden kann,
**dadurch gekennzeichnet, dass**
die Sensoreinheiten (30) derart angeordnet sind, dass bestimmte Bereiche (32) des Parkraums (20) mit einer hohen Genauigkeit durch die Sensoreinheiten (30) überwacht werden und andere Bereiche (31) des Parkraums mit einer niedrigeren Genauigkeit durch die Sensoreinheiten (30) überwacht werden, wobei
Überschneidungsbereiche (42, 44) von Trajektorien anderer Fahrzeuge mit der Trajektorie (40, 45) von der zentralen Steuerungseinheit bestimmt werden und die Trajektorie (40, 45) derart angepasst wird, dass ein Überschneidungsbereich (44) in einem Bereich (32) des Parkraums (20), der mit hoher Genauigkeit durch die Sensoreinheiten (30) überwacht wird, zu liegen kommt.

11. Computerprogramm, umfassend Programmcode zur Durchführung des Verfahrens nach Anspruch 10, wenn das Computerprogramm auf einem Computer ausgeführt wird.

## Claims

1. Valet parking system for automatically taking a vehicle (10, 50) from a handover zone (18) to an allocated parking space (24) within a prescribed parking region (20) and for automatically leaving the parking space and taking the vehicle (10, 50, 60) to a collection zone (19), comprising a central control unit (15) and a car park monitoring system having at least one statically arranged sensor unit (30),
wherein the car park monitoring system is configured to locate the vehicles (10, 50) travelling within the prescribed parking region (20) and to transmit information about the current vehicle position to the central control unit (15), wherein the central control unit (15) is configured to transmit information to the vehicle (10, 50), so that the vehicle (10) can be autonomously guided along a trajectory (40, 45) within the parking region (20) that is based on the information,
**characterized in that**
the sensor units (30) are arranged such that particular areas (32) of the parking region (20) are monitored by the sensor units (30) with a high level of accuracy and other areas (31) of the parking region are monitored by the sensor units (30) with a lower level of accuracy, wherein
the central control unit (15) is set up to determine areas of overlap (42, 44) between trajectories (45) of other vehicles and the trajectory (40) and to adjust the trajectory (40) such that an area of overlap (44) comes to rest in an area (32) of the parking region (20) that is monitored by the sensor units (30) with a high level of accuracy.

2. Valet parking system according to Claim 1, **characterized in that** meeting points are defined within the areas (32) of the parking region (20) that are monitored by the sensor units (30) with a high level of accuracy, and the central control unit (15) is set up to adjust the trajectory (40) such that an area of overlap (44) comes to rest in an area of a meeting point.

3. Valet parking system according to either of Claims 1 and 2, **characterized in that** the information transmitted from the central control unit (15) to the vehicle (10, 50, 60) comprises distance information and/or speed information and/or steering instructions and/or stopping and starting instructions.

4. Valet parking system according to one of Claims 1 to 3, **characterized in that** at least one sensor unit (30) is configured as a 2D video camera system or as a 3D video camera system that implements in particular an object detection function and/or an object tracking function.

5. Valet parking system according to one of Claims 1 to 4, **characterized in that** the central control unit (15) is set up to adjust the trajectory (40) in an area of overlap such that collisions with other vehicles are prevented, wherein the trajectory (40) is continually adjusted on the basis of surroundings information captured by one or more sensor units (30).

6. Valet parking system according to either of Claims 4 and 5, **characterized in that** surroundings information is available with greater spatial resolution and/or greater temporal resolution and/or greater image contrast in the areas (32) of the parking region that are monitored by the cameras (30) with a high level of accuracy than in the areas (31) of the parking region that are monitored by the sensor units (30) with a lower level of accuracy.

7. Valet parking system according to Claim 5 or 6, **characterized in that** additionally surroundings information is captured by ambient capture sensors on the vehicle (10) and is sent from the vehicle to the central control unit (15), wherein the additional surroundings information is taken into consideration when adjusting the trajectory (40, 45).

8. Valet parking system according to one of Claims 1 to 7, **characterized in that** the central control unit (15) has a memory unit (17), wherein the memory unit (17) stores a 2D or 3D map of the prescribed parking region (20) that comprises information about areas (32) of the parking region (20) that are monitored by the sensor units (30) with a high level of accuracy, areas (31) of the parking region (20) that are monitored by the sensor units (30) with a lower level of accuracy, available parking areas, usable lanes, traffic rules and current positions of vehicles, and wherein the map is constantly updated through by means of information captured by the sensor units (30), and a central control unit (15) is configured to determine and adjust trajectories (40, 45) on the basis of the map.

9. Parking region (20) having a valet parking system according to one of Claims 1 to 8.

10. Method for for automatically taking a vehicle (10, 50) from a handover zone (18) to an allocated parking space (24) within a prescribed parking region (20) and for automatically leaving the parking space and taking the vehicle (10, 50) to a collection zone (19), wherein the vehicles (10, 50) travelling within the prescribed parking region (20) are located by means of a car park monitoring system having at least one statically arranged sensor unit (30), and information about the current vehicle position is transmitted to a central control unit (15),
the central control unit (15) transmits information to the vehicle (10, 50), so that the vehicle (10, 50) can be autonomously guided along a trajectory (40, 45) within the parking region (20) that is based on the information, **characterized in that**
the sensor units (30) are arranged such that particular areas (32) of the parking region (20) are monitored by the sensor units (30) with a high level of accuracy and other areas (31) of the parking region are monitored by the sensor units (30) with a lower level of accuracy, wherein
areas of overlap (42, 44) between trajectories of other vehicles and the trajectory (40, 45) are determined by the central control unit, and the trajectory (40, 45) is adjusted such that an area of overlap (44) comes to rest in an area (32) of the parking region (20) that is monitored by the sensor units (30) with a high level of accuracy.

11. Computer program, comprising program code for performing the method according to Claim 10 when the computer program is executed on a computer.

## Revendications

1. Système de voiturier destiné à amener automatiquement un véhicule (10, 50) d'une zone de remise (18) à une place de stationnement (24) attribuée à l'intérieur d'un espace de stationnement (20) prédéfini et à sortir automatiquement de stationnement et amener le véhicule (10, 50, 60) à une zone de réception (19), comprenant une unité de commande centrale (15) et un système de surveillance de parking comprenant au moins une unité de détection (30) montée en position fixe,
le système de surveillance de parking étant configuré pour localiser les véhicules (10, 50) qui circulent à l'intérieur de l'espace de stationnement (20) prédéfini et pour communiquer des informations à propos de la position actuelle du véhicule à l'unité de commande centrale (15),
l'unité de commande centrale (15) étant configurée pour communiquer des informations au véhicule (10, 50), de sorte que le véhicule (10) peut être guidé de manière autonome le long d'une trajectoire (40, 45) basée sur les informations à l'intérieur de l'espace de stationnement (20),
**caractérisé en ce que**
les unités de détection (30) sont disposées de telle sorte que certaines zones (32) de l'espace de stationnement (20) sont surveillées avec une grande précision par les unités de détection (30) et d'autres zones (31) de l'espace de stationnement (20) sont surveillées avec une précision plus faible par les unités de détection (30),
l'unité de commande centrale (15) étant configurée pour déterminer les zones de chevauchement (42, 44) des trajectoires (45) d'autres véhicules avec la trajectoire (40) et adapter la trajectoire (40) de telle sorte qu'une zone de chevauchement (44) se retrouve dans une zone (32) de l'espace de stationnement (20) qui est surveillée avec une grande précision par les unités de détection (30).

2. Système de voiturier selon la revendication 1, **caractérisé en ce que** des points de rencontre sont définis à l'intérieur des zones (32) de l'espace de stationnement (20) qui sont surveillées avec une grande précision par les unités de détection (30) et l'unité de commande centrale (15) est conçue pour adapter la trajectoire (40) de telle sorte qu'une zone de chevauchement (44) se retrouve dans une zone d'un point de rencontre.

3. Système de voiturier selon l'une des revendications 1 ou 2, **caractérisé en ce que** les informations communiquées au véhicule (10, 50, 60) par l'unité de commande centrale (15) comprennent des informations d'itinéraire et/ou des informations de vitesse et/ou des instructions de changement de direction et/ou des instructions d'arrêt et de démarrage.

4. Système de voiturier selon l'une des revendications 1 à 3, **caractérisé en ce qu'**au moins une unité de détection (30) est réalisée sous la forme d'un système de caméra vidéo 2D ou sous la forme d'un système de caméra vidéo 3D, lequel met notamment en oeuvre une fonction de reconnaissance d'objet et/ou une fonction de poursuite d'objet.

5. Système de voiturier selon l'une des revendications 1 à 4, **caractérisé en ce que** l'unité de commande centrale (15) est conçue pour adapter la trajectoire (40) dans une zone de chevauchement de telle sorte que des collisions avec d'autres véhicules sont évitées, la trajectoire (40) étant continuellement adaptée sur la base des informations d'environnement collectées par une ou plusieurs unités de détection (30).

6. Système de voiturier selon l'une des revendications 4 ou 5, **caractérisé en ce que** des informations d'environnement avec une résolution spatiale plus élevée et/ou une résolution temporelle plus élevée ou encore un contraste d'image supérieur sont disponibles dans les zones (32) de l'espace de stationnement qui sont surveillées avec une grande précision par les caméras (30) par rapport aux zones (31) de l'espace de stationnement qui sont surveillées avec une précision plus faible par les unités de détection (30).

7. Système de voiturier selon l'une des revendications 5 ou 6, **caractérisé en ce que** des informations d'environnement supplémentaires sont collectées par des capteurs d'acquisition de l'environnement sur le véhicule (10) et sont envoyées du véhicule à l'unité de commande centrale (15), les informations d'environnement supplémentaires étant prises en compte lors de l'adaptation de la trajectoire (40, 45).

8. Système de voiturier selon l'une des revendications 1 à 7, **caractérisé en ce que** l'unité de commande centrale (15) possède une unité à mémoire (17), une carte 2D ou 3D de l'espace de stationnement (20) prédéfini étant enregistrée sur l'unité à mémoire (17), laquelle comprend des informations sur les zones (32) de l'espace de stationnement (20) qui sont surveillées avec une grande précision par les unités de détection (30), les zones (31) de l'espace de stationnement (20) qui sont surveillées avec une précision plus faible par les unités de détection (30), les aires de stationnement disponibles, les voies de circulation carrossables, les règles de circulation et les positions actuelles des véhicules, et la carte étant continuellement actualisées à travers par les informations collectées au moyen des unités de détection (30) et l'unité de commande centrale (15) étant configurée pour déterminer et adapter les trajectoires (40, 45) sur la base de la carte.

9. Espace de stationnement (20) comprenant un système de voiturier selon l'une des revendications 1 à 8.

10. Procédé pour pour amener automatiquement un véhicule (10, 50) d'une zone de remise (18) à une place de stationnement (24) attribuée à l'intérieur d'un espace de stationnement (20) prédéfini et pour sortir automatiquement de stationnement et amener le véhicule (10, 50) à une zone de réception (19), les véhicules (10, 50) qui circulent à l'intérieur de l'espace de stationnement (20) prédéfini étant localisés au moyen d'un système de surveillance de parking comprenant au moins une unité de détection (30) montée en position fixe et des informations à propos de la position actuelle du véhicule étant communiquées à l'unité de commande centrale (15),
l'unité de commande centrale (15) communiquant des informations au véhicule (10, 50), de sorte que le véhicule (10, 50) peut être guidé de manière autonome le long d'une trajectoire (40, 45) basée sur les informations à l'intérieur de l'espace de stationnement (20),
**caractérisé en ce que**
les unités de détection (30) sont disposées de telle sorte que certaines zones (32) de l'espace de stationnement (20) sont surveillées avec une grande précision par les unités de détection (30) et d'autres zones (31) de l'espace de stationnement (20) sont surveillées avec une précision plus faible par les unités de détection (30),
des zones de chevauchement (42, 44) des trajectoires (45) d'autres véhicules avec la trajectoire (40, 45) étant déterminées et la trajectoire (40, 45) étant adaptée de telle sorte qu'une zone de chevauchement (44) se retrouve dans une zone (32) de l'espace de stationnement (20) qui est surveillée avec une grande précision par les unités de détection (30).

11. Programme informatique, comprenant un code de programme destiné à mettre en oeuvre le procédé selon la revendication 10 lorsque le programme informatique est exécuté sur un ordinateur.
